# EUROPEAN PATENT SPECIFICATION

(11) **EP 3 039 985 B1**
(45) Date of publication and mention of the grant of the patent: **18.07.2018**
(21) Application number: 15153607.5
(22) Date of filing: 03.02.2015
(51) Int. Cl.: A45B 3/04, F21Y 115/10

(54) **A lighting umbrella**
Beleuchtungsschirm
Parapluie d'éclairage

(30) Priority: 29.12.2014 CN 201410832999
(43) Date of publication of application: 06.07.2016
(73) Proprietor: Linhai Zhongtian Electronic Appliance Co., Ltd., Linhai City Zhejiang 317000 (CN)
(72) Inventor: Jin, Shimin, 317000 Linhai City (CN)
(74) Representative: Patentanwälte Gierlich & Pischitzis Partnerschaft mbB

(56) References cited:
- WO-A2-2006/122514
- DE-U1-202004 012 189
- US-A1- 2006 070 642

## Description

### TECHNICAL FIELD

The invention relates to the technical field of sunshade umbrellas, in particular to a novel construction of a lighting umbrella.

### BACKGROUND OF THE INVENTION

Sunshade umbrellas are leisure products frequently used in people's daily life, see e.g. DE 20 2004 012189 U1. At present, a wide variety of sunshade lighting umbrellas are commonly used among which are those having a plurality of light emitting diode (LED) lamp beads mounted on the supporting spokes or frameworks. However, during production, the necessity of drilling bores in every one of the frameworks makes the strength of the sunshade umbrella degrade so that the umbrella is more likely to be damaged. Mounting these LED lamp beads into the bores is both time and labor consuming. Furthermore, to realize a good lighting effect, a lot of lamp beads are required, but an excessive number of lamp beads leads to excessive wiring circuits, causing the mounting to be more complicated. On the other hand, once individual lamp beads burn out or individual circuits are damaged, the use of the whole umbrella will be detrimentally influenced and maintenance is difficult.

### SUMMARY OF THE INVENTION

The present invention provides a lighting umbrella, in accordance with claims which follow. In view of the problems in the prior art, an objective of the invention is to provide a technical solution of a novel lighting umbrella.

With rational structure design, by providing light guide bars on the short frameworks and making surface mount device (SMD) lamps cling to the light guide bars, a light band is formed through continuous refraction and reflection to realize the purposes of lighting and beautifying the environment at night; connecting a plurality of light guide bars in series to guide light for the long frameworks effectively avoid decreasing the brightness due to too long light guide bars; and both the assembly and the maintenance are more convenient and less time and labor consuming.

### BRIEF DESCRIPTION OF THE DRAWINGS

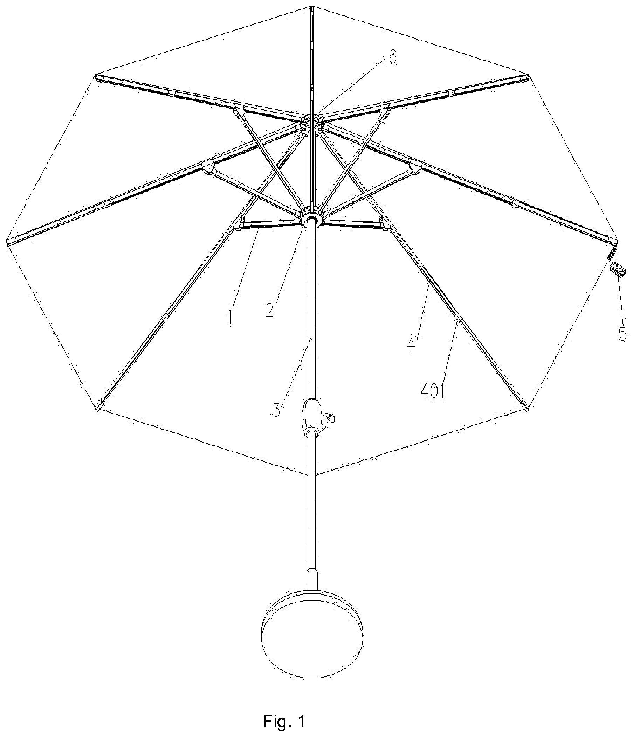

Fig. 1 is an overall structure diagram of the invention;

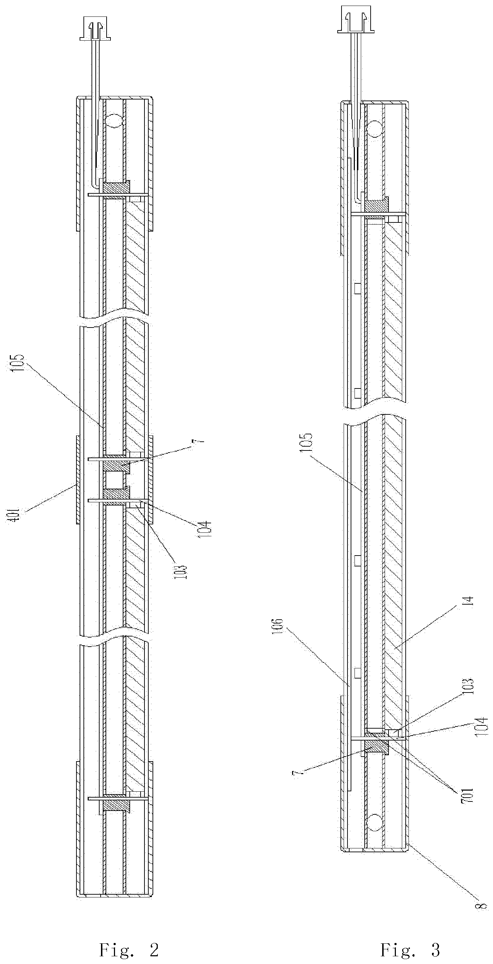

Fig. 2 is a cross-sectional structure diagram of a long framework;
Fig.3 is a cross-sectional structure diagram of a short framework;

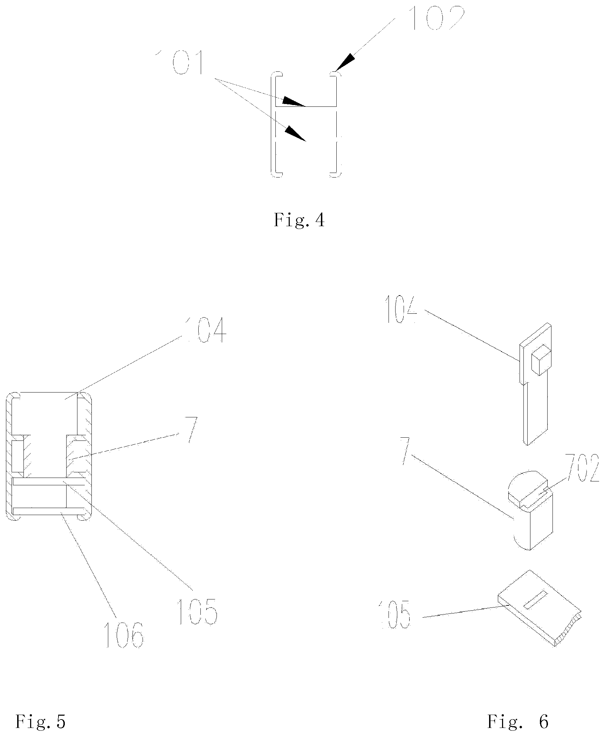

Fig. 4 is a cross-sectional diagram of a framework;
Fig. 5 is a cross-sectional structure diagram of a light emitting device;
Fig. 6 is a partially exploded structure diagram of the light emitting device;

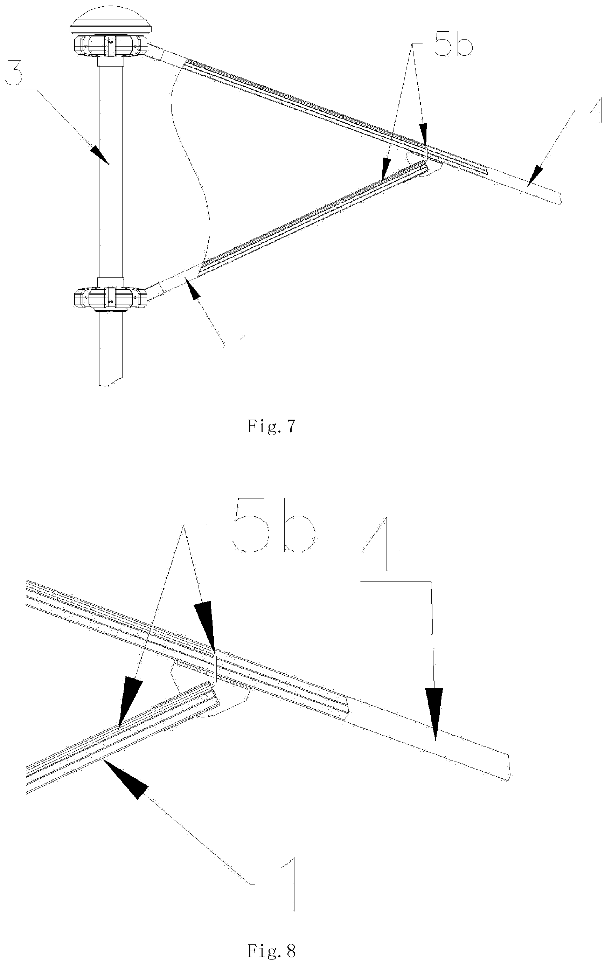

Fig. 7 is a diagram showing the running of a light source wire of a short framework;
Fig. 8 is a partially enlarged diagram showing the running of the light source wire of the short framework;

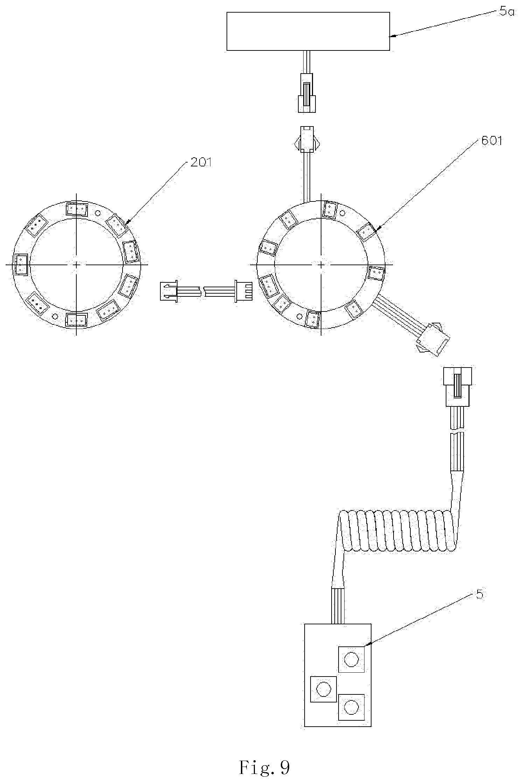

Fig. 9 is a structure diagram of one electrical connection;

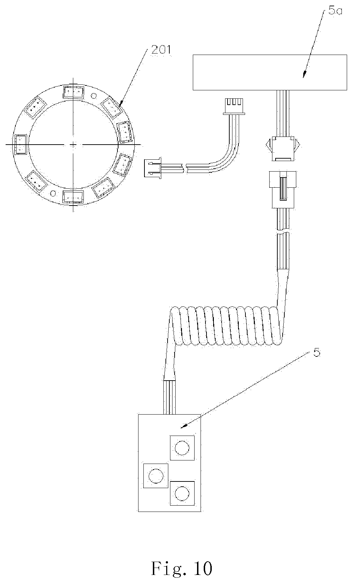

Fig. 10 is a structure diagram of another electrical connection;

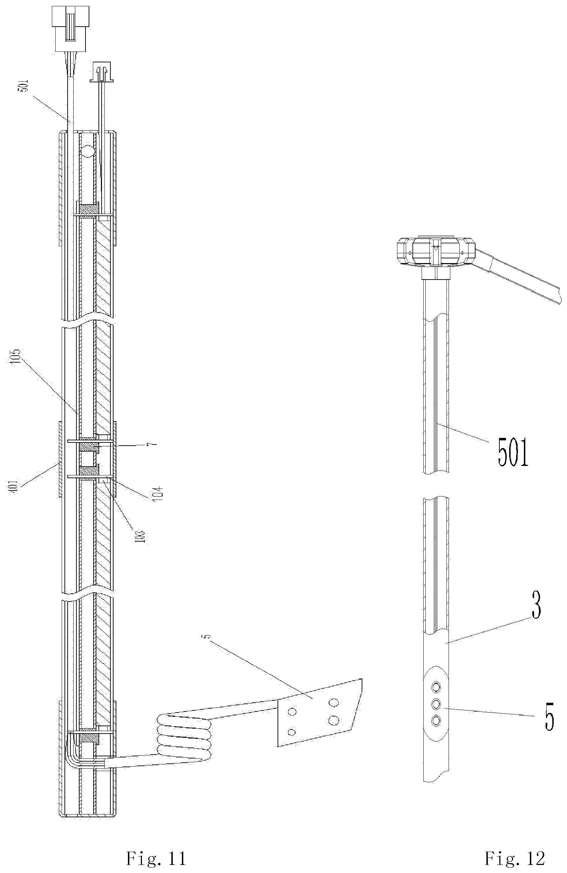

Fig. 11 is a layout of a switch wire;
Fig. 12 is another layout of the switch wire;

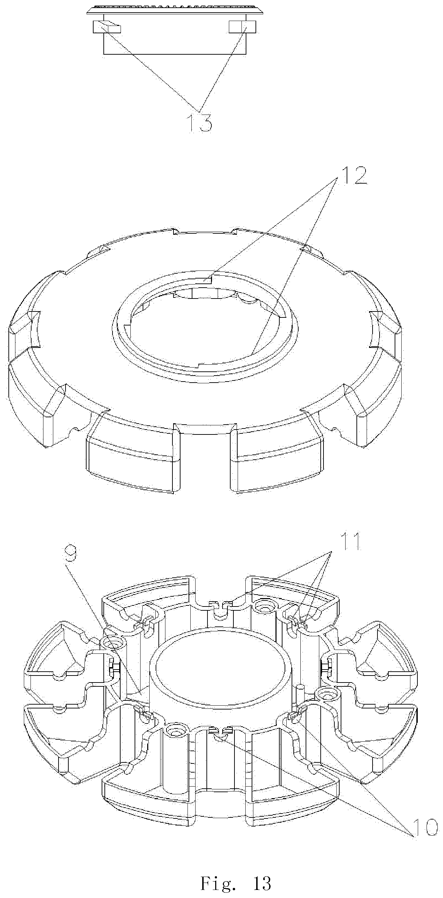

Fig. 13 is a structure diagram of a slot;
in which:
1: Short framework; 2: Lower slot; 3: Stick; 4: Long framework; 5: Switch; 5a: Power supply; 5b: Light source wire; 6: Upper slot; 7: Fixed base; 8: Stopper; 9: Annular ring; 10: Wire lead-out hole; 11: Limiting block; 12: Arc bayonet; 13: Arc bump; 14: Light guide bar; 101 Notch; 102: Clamping flange; 103: SMD LED lamp; 104: printed circuit board (PCB) lamp panel; 105: PCB light bar; 106: Diffusing bar; 201: First wire connection plate; 401: Wrapper; 501: Switch wire; 601: Second wire connection plate; 701: Plughole; 702: Through hole.

### DETAILED DESCRIPTION OF THE INVENTION

The invention will be further described in detail below with reference to the accompanying drawings.

A novel lighting umbrella is provided, including a lower slot 2, an upper slot 6 fixed on the top of a stick 3, and frameworks, one end of a long framework 4 being articulated with the upper slot 6 while the other end thereof supporting a cover, one end of a short framework 1 being articulated with the lower slot 2 while the other end thereof being articulated with the middle of the long framework 4; a notch 101 having a light emitting device provided therein is formed in one or both of the long framework 4 and the short framework 1, there may be one or two notches both for the long framework 4 or the short framework 1; the light emitting device comprises a light guide bar 14 clamped inside the notch 101, and a clamping flange 102 that can clamp the light guide bar 14 to prevent it from falling off is provided on the edge of the notch 101; the light guide bar 14 is provided with a light source on its end surface; the light source includes an SMD LED lamp 103 and a PCB lamp panel 104 which are connected to each other by welding, and the light source is fixed on a fixed base 7. A plughole 701 is formed on a cross-section of a side plate of the notch 101 corresponding to that of the fixed base 7, and the fixed base 7 is inserted into the plughole 701 to be fixed on the framework and provided with a stopper 8 for the purpose of protection. A through hole 702 is formed inside the fixed base 7, the PCB lamp panel 104 is inserted into and fixed in the through hole 702 inside the fixed base 7, that is, the PCB lamp panel may be fixed on the fixed base 7. The SMD LED lamp 103 clings to the light guide bar 14, and after the PCB lamp panel is well connected to and powered by the power supply, light from the SMD LED lamp penetrates into the light guide bar 14 and forms a light band by continuous refraction and reflection inside the light guide bar, thereby realizing the purposes of lighting and beatifying the environment.

A second wire connection plate 601 is provided inside the upper slot 6, a first wire connection plate 201 is provided inside the lower slot 2, and a light source wire 5b is arranged inside the short framework 1; one end of the wire is connected to the first wire connection plate 201, while the other end thereof passes through an articulator by which the long framework 4 is articulated with the short framework 1 and through the long framework 4 to be electrically connected to the second wire connection plate 601; and the second wire connection plate 601 is electrically connected to a switch 5 and a power supply 5a. When there is no light guide bar provided on the long framework 4, it is unnecessary to provide the second wire connection plate 601 inside the slot 6 accordingly, that is, one end of the light source wire 5b arranged inside the short framework 1 is electrically connected to the first wire connection plate 201 while the other end thereof passes through an articulator by which the long framework 4 is articulated with the short framework 1 and through the long framework 4 to be electrically connected to the power supply 5a that is externally connected to a switch 5. When there is no light guide bar on the short framework 1, it is unnecessary to provide the first wire connection plate 201 and the light source wire 5b inside the slot 2 accordingly, that is, the second wire connection plate 601 inside the slot 6 is electrically connected to the switch 5 and the power supply 5a. The above three specific circuit connection manners may supply power to the light emitting device better.

There is at least one light guide bar 14 clamped on any one long framework 4. When there are many light guide bars 14, two fixed bases 7 for fixing the corresponding light guide bars are provided at positions where the light guide bars inside the long framework 4 are butt jointed with the light guide bars, and the butt-joints are sleeved with a wrapper 401. It is better to provide a plurality of light guide bars on the long framework to realize uniform light penetrated into the light guide bars 14 from the SMD LED lamp, good refraction and reflection effects, easier formation of a light band, and better lighting and environment beatification effects.

Each of the upper slot 6 and the lower slot 2 of the novel lighting umbrella provided by the invention consists of a slot cover and a slot holder; an annular ring 9 having a plurality of wire lead-out holes 10 on its outer circle is provided inside the slot holder, with two symmetrical trapezoidal limiting blocks 11 being provided on any one of the wire lead-out holes 10; and, an arc bayonet 12 for clamping decorative parts or the power supply is provided on the inner circle of the slot cover, with a corresponding arc bump 13 being provided on the decorative parts connecting ring.

The switch wire 501 of the switch 5 may be connected to the power supply 5a through a notch 101 on any one long framework 4, or connected to the power supply 5a through the inside of the stick 3. That is, the switch 5 may be directly hung on a certain long framework 4 or fixed on the stick 3.

A diffusing bar 106 is clamped inside the notch 101; a PCB light bar 105 of the PCB lamp is welded between the diffusing bar 106 and the notch 101, the PCB light bar 105 is fixed with the frameworks by welding the PCB lamp panel 104 and provided with a stopper 8 for the purpose of protection. The above technical solution constitutes a novel light emitting device that may also be used along with the light guide bar structure.

The number of the frameworks of this lighting umbrella is not limited, including four, six or eight frameworks, etc, and this lighting umbrella is also not limited to an upright pole umbrella or roman umbrella in terms of shape.

## Claims

1. A lighting umbrella, comprising a lower slot (2) and an upper slot (6) fixed on the top of a stick (3), one end of a long framework (4) being articulated with the upper slot (6) while the other end thereof supporting a cover, one end of a short framework (1) being articulated with the lower slot (2) while the other end thereof being articulated with the middle of the long framework (4), wherein a notch (101) having a light emitting device provided therein is formed in one or both of the long framework (4) and the short framework (1); the light emitting device comprises a light guide bar (14) clamped inside the notch (101) and provided with a light source on its end surface; the light source being fixed on a fixed base (7) that is fixedly connected to the frameworks and sleeved with a stopper (8) for the purpose of protection,
wherein the light source comprises a surface mount device light emitting diode (SMD LED) lamp (103) and a printed circuit board (PCB) lamp panel (104); a through hole (702) is formed inside the fixed base (7), the PCB lamp panel (104) is inserted into and fixed in the through hole (702) inside the fixed base (7); and the SMD LED lamp (103) clings to the light guide bar (14) and the PCB lamp panel is connected to the power supply wire.

2. The lighting umbrella according to claim 1, wherein a second wire connection plate (601) is provided inside the upper slot (6), a first wire connection plate (201) is provided inside the lower slot (2), and a light source wire (5b) is arranged inside the short framework (1); one end of the wire is
connected to the first wire connection plate (201), while the other end thereof passes through an articulator by which the long framework (4) is articulated with the short framework (1) and through the long framework (4) to be electrically connected to the second wire connection plate (601); and the second wire connection plate (601) is electrically connected to a switch (5) and
a power supply (5a).

3. The lighting umbrella according to claim 1, wherein a first wire connection plate (201) is provided inside the lower slot (2), and a light source wire (5b) is arranged inside the short framework (1); and, one end of the wire is electrically connected to the first wire connection plate (201), while the other end thereof passes through an articulator by which the long framework (4) is articulated with the short framework (1) and through the long framework (4) to be electrically connected to the power supply (5a) that is externally connected to a switch (5).

4. The lighting umbrella according to claim 1, wherein upper and lower notches (101) are provided on the short framework (1) and the long framework (4) of the framework, respectively, each notch (101) having a clamping flange (102) on its edge for clamping the light guide bar (14); and, a plughole (701) is formed on a cross-section of a side plate of the notch (101) corresponding to that of the fixed base (7), and the fixed base (7) is inserted into the plughole (701) to be fixed on the framework.

5. The lighting umbrella according to claim 1, wherein each of the upper slot (6) and the lower slot (2) consists of a slot cover and a slot holder; an annular ring (9) having a plurality of wire lead-out holes (10) on its outer circle is provided inside the slot holder, with two symmetrical trapezoidal limiting blocks (11) being provided on any one of the wire lead-out holes (10); and, an arc bayonet (12) for clamping decorative parts or the power supply is provided on the inner circle of the slot cover, with a corresponding arc bump (13) being provided on the decorative parts connecting ring.

6. The lighting umbrella according to claim 2 or 3, wherein the switch wire (501) of the switch (5) is connected to a power supply (5a) through a notch (101) on any one long framework (4).

7. The lighting umbrella according to claim 2 or 3, wherein the switch wire (501) of the switch (5) is connected to the power supply (5a) through the inside of the stick (3).

8. The lighting umbrella according to claim 1, wherein there are at least two light guide bars (14) clamped on any one long framework (4), two fixed bases (7) for fixing the corresponding light guide bars are provided at positions where the light guide bars inside the long framework (4) are butt jointed with the light guide bars, and the butt-joints are sleeved with a wrapper (401).

9. The lighting umbrella according to claim 1, wherein a diffusing bar (106) is clamped inside the notch (101); a PCB light bar (105) of the PCB lamp Is welded between the diffusing bar (106) and the notch (101), the PCB light bar (105) is fixed with the frameworks by welding the PCB lamp panel (104) and provided with a stopper (8) for the purpose of protection.

## Patentansprüche

1. Beleuchtungsschirm, umfassend einen unteren Schlitz (2) und einen oberen Schlitz (6), welche an der Oberseite eines Stabes (3) befestigt sind, wobei ein Ende eines langen Rahmens (4) mit dem oberen Schlitz (6) gelenkig verbunden ist, während sein anderes Ende eine Abdeckung unterstützt, und wobei ein Ende eines kurzen Rahmens (1) mit dem unteren Schlitz (2) gelenkig verbunden ist, während sein anderes Ende mit der Mitte des langen Rahmens (4) gelenkig verbunden ist, und wobei eine Kerbe (101) mit einer darin vorgesehenen lichtemittierenden Vorrichtung in einem oder beiden des langen Rahmens (4) und des kurzen Rahmens (1) ausgebildet ist; und wobei die lichtemittierende Vorrichtung einen Lichtleitstab (14) umfasst, welcher in der Kerbe (101) geklemmt ist und an seiner Endoberfläche mit einer Lichtquelle versehen ist; und wobei die Lichtquelle an einer festen Basis (7) befestigt ist, welche fest mit den Rahmen verbunden und mit einem Anschlag (8) zum Zweck des Schutzes versehen ist, und wobei die Lichtquelle eine SMD-LED-Lampe (Surface Mount Device Light Emitting Diode) (103) und ein Leiterplatte (PCB)-Lampenpanel (104) umfasst; und wobei ein Durchgangsloch (702) innerhalb der festen Basis (7) ausgebildet ist, und wobei das PCB-Lampenpanel (104) in dem Durchgangsloch (702) innerhalb der festen Basis (7) geklemmt und darin befestigt ist; und wobei die SMD-LED-Lampe (103) an dem Lichtleitstab (14) haftet und das PCB-Lampenpanel an den Stromversorgungsdraht angeschlossen ist.

2. Beleuchtungsschirm nach Anspruch 1, wobei eine zweite Drahtverbindungsplatte (601) innerhalb des oberen Schlitzes (6) vorgesehen ist, wobei eine erste Drahtverbindungsplatte (201) innerhalb des unteren Schlitzes (2) vorgesehen ist, und wobei ein Lichtquellendraht (5b) innerhalb des kurzen Rahmens (1) angeordnet ist; und wobei ein Ende des Drahtes mit der ersten Drahtverbindungsplatte (201) verbunden ist, während sein anderes Ende durch einen Artikulator, über den der lange Rahmen (4) gelenkig mit dem kurzen Rahmen (1) verbunden ist, und durch den langen Rahmen (4) zum elektrischen Verbinden mit der zweiten Drahtverbindungsplatte (601) läuft, und wobei die zweite Drahtverbindungsplatte (601) elektrisch mit einem Schalter (5) und einer Stromversorgung (5a) verbunden ist.

3. Beleuchtungsschirm nach Anspruch 1, wobei eine erste Drahtverbindungsplatte (201) innerhalb des unteren Schlitzes (2) vorgesehen und ein Lichtquellendraht (5b) innerhalb des kurzen Rahmens (1) angeordnet ist; und wobei ein Ende des Drahts elektrisch mit der ersten Drahtverbindungsplatte (201) verbunden ist, während sein anderes Ende durch einen Artikulator, über den der lange Rahmen (4) gelenkig mit dem kurzen Rahmen (1) verbunden ist, und durch den langen Rahmen zum elektrischen Verbinden mit der Stromversorgung (5a), die extern mit einem Schalter (5) verbunden ist, läuft.

4. Beleuchtungsschirm nach Anspruch 1, wobei obere und untere Kerben (101) an dem kurzen Rahmen (1) bzw. dem langen Rahmen (4) des Rahmens vorgesehen sind, und wobei jede Kerbe (101) jeweils einen Klemmflansch (102) an seiner Kante zum Festklemmen des Lichtleitstabes (14) umfasst, und wobei ein Abflussloch (701) an einem Querschnitt einer Seitenplatte der Kerbe (101) ausgebildet ist, welche der Kerbe der festen Basis (7) zugeordnet ist, und wobei die feste Basis (7) in das Abflussloch (701) zum Befestigen auf dem Rahmen eingesetzt ist.

5. Beleuchtungsschirm nach Anspruch 1, wobei jeder des oberen Schlitzes (6) und des unteren Schlitzes (2) durch eine Schlitzabdeckung und einen Schlitzhalter ausgebildet ist; und wobei ein ringförmiger Ring (9) mit einer Vielzahl von Drahtausführungslöchern (10) an seinem äußeren Kreis innerhalb des Schlitzhalters vorgesehen ist, und wobei zwei symmetrische trapezförmige Begrenzungsblöcke (11) an irgendeinem der Drahtausführungslöcher vorgesehen sind (10) ; und wobei ein Lichtbogenbajonett (12) zum Festklemmen von dekorativen Teilen oder der Stromversorgung an dem inneren Kreis der Schlitzabdeckung vorgesehen ist, und wobei ein entsprechender Lichtbogenhöcker (13) an dem Verbindungsring der dekorativen Teile vorgesehen ist.

6. Beleuchtungsschirm nach Anspruch 2 oder 3, wobei das Schaltkabel (501) des Schalters (5) mit einer Stromversorgung (5a) durch eine Kerbe (101) an irgendeinem langen Rahmen (4) verbunden ist.

7. Beleuchtungsschirm nach Anspruch 2 oder 3, wobei das Schaltkabel (501) des Schalters (5) mit der Stromversorgung (5a) durch die Innenseite des Stabs (3) verbunden ist.

8. Beleuchtungsschirm nach Anspruch 1, wobei an einem langen Rahmen (4) mindestens zwei Lichtleitstäbe (14) eingespannt sind, und wobei zwei feste Basen (7) zur Fixierung der entsprechenden Lichtleitstäbe an den Stellen vorgesehen sind, wo die Lichtleitstäbe innerhalb des langen Rahmens (4) stumpf mit den Lichtleitstäben verbunden sind, und wobei die Stoßverbindungen mit einer Umhüllung (401) ummantelt sind.

9. Beleuchtungsschirm nach Anspruch 1, wobei ein Streustab (106) innerhalb der Kerbe (101) eingeklemmt ist; wobei ein PCB-Lichtbalken (105) der PCB-Lampe zwischen den Streustab (106) und die Kerbe (101) geschweißt ist, und wobei der PCB-Lichtbalken (105) mit den Rahmen durch Verschweißung des PCB-Lampenpanels (104) befestigt und mit einem Stopper (8) zum Zweck des Schutzes versehen ist.

## Revendications

1. Un parapluie d'éclairage, comprenant une fente inférieure (2) et une fente supérieure (6) fixée en haut d'un manche (3), une des extrémités d'un longue cadre (4) étant articulée avec la fente supérieure (6) alors que l'autre extrémité soutient une housse, l'une extrémité d'un cadre court (1) étant articulée avec la fente inférieure (2) alors que l'autre extrémité est articulée au milieu du long cadre (4), où il y a un cran (101) avec un dispositif d'émission de lumière prévu à l'intérieur dans l'un des cadres longs (4) et courts (1) ou dans les deux; le dispositif d'émission de lumière comprend une barre de guidage de lumière (14) serrée à l'intérieur de la fente (101) et pourvue d'une source de lumière à son extrémité; la source lumineuse est fixée sur une base fixe (7) liée aux cadres et munie d'un bouchon (8) de protection, la source lumineuse comprend une lampe à diodes électroluminescentes (SMD LED) sur la surface (103) et un panneau de lampe de carte de circuit imprimé (PCB) (104); un trou traversant (702) est formé à l'intérieur de la base fixe (7), le panneau de lampe PCB (104) est inséré et fixé dans le trou traversant (702) à l'intérieur de la base fixe (7); et la lampe LED SMD (103) s'accroche à la barre de guidage de lumière (14) et le panneau de lampe PCB est connecté au fil d'alimentation électrique.

2. Selon le 1^{er} point, le parapluie d'éclairage a une seconde plaque de connexion (601) est prévue à l'intérieur de la fente supérieure (6), une première plaque de connexion (201) est prévue à l'intérieur de la fente inférieure et un fil de source lumineuse (5b) se trouve à l'intérieur du cadre court (1); l'une des extrémités du fil est reliée à la première plaque de connexion de fils (201), alors que l'autre extrémité traverse un articulateur par lequel le long cadre (4) est articulé avec le cadre court (1) et il traverse aussi le cadre long (4) pour se connecter électriquement à la seconde plaque de connexion de fil (601); et la seconde plaque de connexion de fil (601) est connectée électriquement à un commutateur (5) et à une alimentation électrique (5a).

3. Selon le 1^{er} point, le parapluie d'éclairage contient une première plaque de connexion de fil (201) est prévue à l'intérieur de la fente inférieure (2), et un fil de source de lumière (5b) se trouve à l'intérieur du cadre court (1); et une extrémité du fil est connectée électriquement à la première plaque de connexion de fil (201), alors que l'autre extrémité traverse un articulateur par lequel le long cadre (4) est articulé avec le cadre court (1) et il traverse aussi le long cadre (4) pour se connecter électriquement à l'alimentation (5a) qui est connectée extérieurement à un commutateur (5).

4. Selon le 1^{er} point, le parapluie d'éclairage contient des fentes supérieure et inférieure (101) prévues sur le cadre court (1) et le cadre long (4) de la structure, respectivement, chaque fente (101) ayant une bride de serrage (102) au bord pour serrer la barre de guidage de lumière (14); et trou de vidange (701) est formée sur une section transversale d'une plaque latérale de la fente (101) correspondant à celle de la base fixe (7), et la base fixe (7) est insérée dans trou de vidange (701) pour se fixer sur le cadre.

5. Selon le 1^{er} point, sur le parapluie d'éclairage, chacune des fentes supérieure (6) et inférieure (2) est constituée d'un couvercle de fente et d'un support de fente; une bague annulaire (9) avec plusieurs trous de sortie de fil (10) sur son cercle extérieur est prévue à l'intérieur du support de fente, avec deux blocs de limitation trapézoïdaux symétriques (11) prévus sur l'un des trous de sortie de fil (10); et une baïonnette d'arc (12) pour serrer les pièces décoratives ou l'alimentation électrique est prévue sur le cercle intérieur du couvercle de fente, une bosse d'arc correspondante (13) est prévue sur la bague de raccordement de pièces décoratives.

6. Selon les points 2 et 3, le fil de commutation (501) de l'interrupteur (5) est relié à une alimentation électrique (5a) à travers une fente (101) sur un long cadre (4).

7. Selon les points 2 et 3, le fil de commutation (501) de l'interrupteur (5) est relié à une alimentation électrique (5a) à l'intérieur du manche.

8. Selon le 1^{er} point, il y a au moins deux barres de guidage de lumière (14) serrées sur un cadre long (4), deux bases fixes (7) pour fixer les barres de guidage de lumière correspondantes sont prévues aux positions où les guides de lumière rentrent dans le cadre long (4) sont mises bout à bout avec les barres de guide de lumière, et les joints sont entourés d'un papier (401).

9. Selon le 1^{er} point, il y a une barre de diffusion (106) serrée à l'intérieur de la fente (101) ; une barre de lumière PCB (105) de la lampe PCB est soudée entre la barre de diffusion (106) et la fente (101), la barre de lumière PCB (105) est fixée avec les cadres en soudant le panneau de lampe PCB (104) et il y a un bouchon (8) de protection.
